# EUROPEAN PATENT APPLICATION

(11) **EP 4 796 393 A1**
(43) Date of publication of application: **26.08.2026**
(21) Application number: 26154010.8
(22) Date of filing: 26.01.2026
(51) Int. Cl.: B60T 7/12, B60W 30/18, B60T 13/66, B60W 50/14

(54) **MOTION MANAGER AND METHOD FOR PROCESSING INFORMATION**

(30) Priority: 25.02.2025 JP 2025028018
(71) Applicant: Toyota Jidosha Kabushiki Kaisha, Toyota-shi, Aichi-ken 471-8571 (JP)
(72) Inventor: MIYAKE, Kazuki, Toyota-shi, Aichi-ken, 471-8571 (JP); KANDA, Wataru, Toyota-shi, Aichi-ken, 471-8571 (JP); NINOMIYA, Kazuki, Toyota-shi, Aichi-ken, 471-8571 (JP); KOGA, Takeaki, Toyota-shi, Aichi-ken, 471-8571 (JP); HOSAKA, Shun, Toyota-shi, Aichi-ken, 471-8571 (JP); HORIO, Masanobu, Toyota-shi, Aichi-ken, 471-8571 (JP)
(74) Representative: TBK

(57) **Abstract**

A motion manager includes a receiving unit, an instruction output unit, and a notification output unit. The receiving unit receives, from application software, a stationary-state hold request as a motion request for holding a vehicle in a stationary state. The instruction output unit sends, on condition that the receiving unit received the stationary-state hold request, an instruction signal to a hydraulic brake of the vehicle for actuating the hydraulic brake. The notification output unit sends a notification signal to a notification device, installed in the vehicle, for prompting the driver to perform a driving operation if a specified condition, determined in advance, for holding the vehicle in the stationary state is not satisfied and the hydraulic brake is in a de-actuated state when the receiving unit receives the stationary-state hold request.

## Description

### CROSS-REFERENCE TO RELATED APPLICATIONS

This application is based upon and claims the benefit of priority from prior Japanese Patent Application No. 2025-028018, filed on February 25, 2025, the entire contents of which are incorporated herein by reference.

### BACKGROUND

### 1. Field

The following description relates to a motion manager and a method for processing information.

### 2. Description of Related Art

JP2024-135505A describes a vehicle including a motion manager and hydraulic brakes. The motion manager receives, from application software, a stationary-state hold request, which is a motion request, for holding the vehicle in a stationary state. Upon receipt of the stationary-state hold request, the motion manager sends an instruction signal to the hydraulic brakes to actuate them.

When the hydraulic brakes are in a de-actuated state, the motion manager, such as that described in the above publication, may not be able to hold the vehicle in a stationary state.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a motion manager includes a receiving unit, an instruction output unit, and a notification output unit. The receiving unit is configured to receive, from application software, a stationary-state hold request as a motion request for holding a vehicle in a stationary state. The instruction output unit is configured to send, on condition that the receiving unit received the stationary-state hold request, an instruction signal to a hydraulic brake of the vehicle for actuating the hydraulic brake. The notification output unit is configured to send a notification signal to a notification device, installed in the vehicle, for issuing a notification to a driver prompting the driver to perform a driving operation if a specified condition, determined in advance, for holding the vehicle in the stationary state is not satisfied in case the hydraulic brake is in a de-actuated state, when the receiving unit receives the stationary-state hold request.

In another general aspect, a method for processing information is implemented by a computer installed in a vehicle. The method includes receiving, from application software, a stationary-state hold request as a motion request for holding the vehicle in a stationary state. The method also includes, on condition that the stationary-state hold request has been received, sending an instruction signal to a hydraulic brake of the vehicle for actuating the hydraulic brake. The method further includes outputting a notification signal for issuing a notification to a driver that prompts the driver to perform a driving operation if a specified condition, determined in advance, for holding the vehicle in the stationary state is not satisfied in case the hydraulic brake is in a de-actuated state, when the stationary-state hold request is received.

Other features and aspects will be apparent from the following detailed description, the drawings, and the claims.

### BRIEF DESCRIPTION OF THE DRAWINGS

Fig. 1 is a schematic diagram of a vehicle.
Fig. 2 is a functional block diagram illustrating the basic configuration of a motion manager installed in the vehicle of Fig. 1.
Fig. 3 is a flowchart illustrating a series of processes executed when the motion manager receives a stationary-state hold request.
Fig. 4 is a flowchart illustrating stationary-state hold control executed by the motion manager.
Fig. 5 is a flowchart illustrating driving operation switching control executed by the motion manager.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### Schematic Configuration of Vehicle

One embodiment of a motion manager will now be described with reference to the drawings.

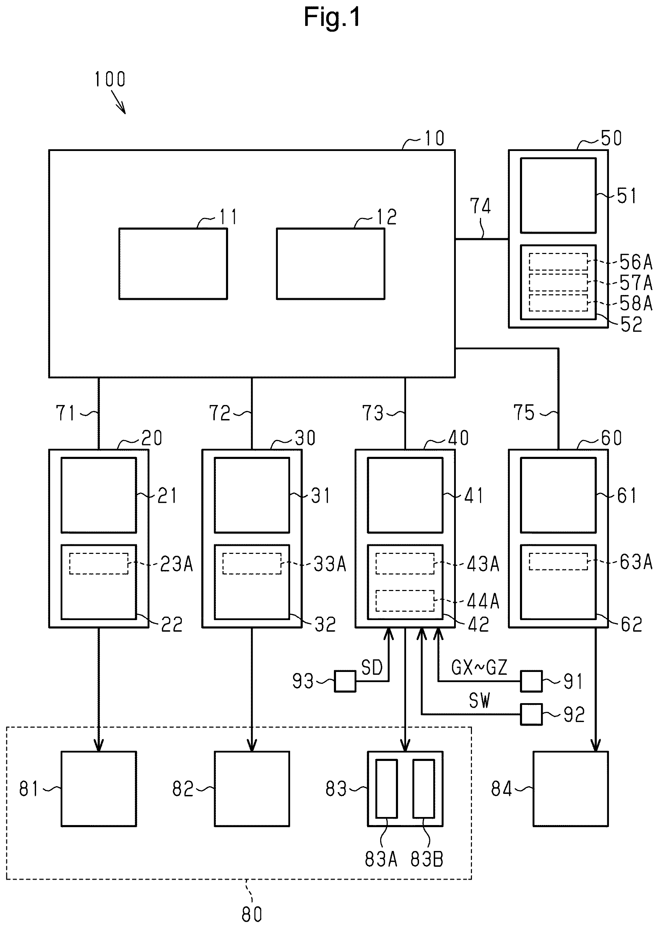

As shown in Fig. 1, a vehicle 100 includes an actuator system 80. The actuator system 80 includes a power train device 81, a steering device 82, and a brake system 83.

The power train device 81 includes an engine, a transmission, and other devices. The engine is configured to apply driving force via the transmission to drive wheels of the vehicle 100. One example of the steering device 82 is a rack and pinion type electric steering device. The steering device 82 is configured to change the direction in which the steerable wheels of the vehicle 100 are oriented by controlling a rack and pinion (not shown).

The brake system 83 generates braking force applied to the vehicle 100. The brake system 83 includes a hydraulic brake 83A and a parking brake 83B. The hydraulic brake 83A is a device configured to control the braking force applied to the vehicle 100 by adjusting hydraulic pressure.

One example of the hydraulic brake 83A is a disc brake. The parking brake 83B is an electric parking brake, which is a device that holds the vehicle 100 in a stationary state by actuating an electric motor to press a pad against a disc rotor.

The vehicle 100 includes a meter display device 84. The meter display device 84 is located between the driver's seat and the windshield in the vehicle 100. When a driver of the vehicle 100 is seated in the driver's seat, the meter display device 84 is visible to the driver. The meter display device 84 presents the driver with information such as the speed and fuel level of the vehicle 100 in addition to various warning indicators. The meter display device 84 is one example of a notification device.

As shown in Fig. 1, the vehicle 100 includes a central electronic control unit (ECU) 10, a power train ECU 20, a steering ECU 30, a brake ECU 40, an advanced driver assistance ECU 50, and a meter ECU 60.

The vehicle 100 includes a first external bus 71, a second external bus 72, a third external bus 73, and a fourth external bus 74.

The central ECU 10 controls the entire vehicle 100. The central ECU 10 includes a CPU 11 and a storage device 12. The storage device 12 stores various programs and various data in advance. The storage device 12 includes a ROM, a RAM, and storage. The CPU 11 executes the programs stored in the storage device 12 to perform various processes.

The power train ECU 20 is configured to communicate with the central ECU 10 via the first external bus 71. The power train ECU 20 sends control signals to the power train device 81 to control the power train device 81.

The power train ECU 20 includes a CPU 21 and a storage device 22. The storage device 22 stores various programs and various data in advance. The storage device 22 stores, in advance, a power train application 23A as one of the programs. The power train application 23A is application software for controlling the power train device 81. The storage device 22 includes a ROM, a RAM, and storage. The CPU 21 executes the power train application 23A, which is stored in the storage device 22, to implement the functionality of a power train control unit 23, which will be described later.

The steering ECU 30 is configured to communicate with the central ECU 10 via the second external bus 72. The steering ECU 30 sends control signals to the steering device 82 to control the steering device 82.

The steering ECU 30 includes a CPU 31 and a storage device 32. The storage device 32 stores various programs and various data in advance. The storage device 32 stores, in advance, a steering application 33A as one of the programs. The steering application 33A is application software for controlling the steering device 82. The storage device 32 includes a ROM, a RAM, and storage. The CPU 31 executes the steering application 33A, which is stored in the storage device 32, to implement the functionality of a steering control unit 33, which will be described later.

The brake ECU 40 is configured to communicate with the central ECU 10 via the third external bus 73. The brake ECU 40 sends control signals to the brake system 83 to control the brake system 83.

The brake ECU 40 includes a CPU 41 and a storage device 42. The storage device 42 stores various programs and various data in advance. The storage device 42 stores, in advance, a brake application 43A as one of the programs. The brake application 43A is application software for controlling the brake system 83. The storage device 42 stores, in advance, a motion manager application 44A as one of the programs. The motion manager application 44A is application software for arbitrating motion requests. The storage device 42 includes a ROM, a RAM, and storage.

The CPU 41 executes the brake application 43A, which is stored in the storage device 42, to implement the functionality of a brake control unit 43, which will be described later. The CPU 41 executes the motion manager application 44A, which is stored in the storage device 42, to implement the functionality of a motion manager 44, which will be described later. That is, the CPU 41 executes the motion manager application 44A, which is stored in the storage device 42, to perform various processes in a method for processing information. The brake ECU 40 is one example of a computer installed in the vehicle 100.

The advanced driver assistance ECU 50 is configured to communicate with the central ECU 10 via the fourth external bus 74. The advanced driver assistance ECU 50 performs various types of driver assistances. The advanced driver assistance ECU 50 includes a CPU 51 and a storage device 52. The storage device 52 stores various programs and various data in advance. The programs include a first assistance application 56A, a second assistance application 57A, and a third assistance application 58A.

One example of the first assistance application 56A is application software for autonomous emergency braking (AEB), which automatically applies the brakes to reduce severity of a collision involving the vehicle 100. One example of the second assistance application 57A is application software for lane keeping assist (LKA), which assists in keeping the traveling vehicle 100 within its lane. One example of the third assistance application 58A is application software for adaptive cruise control (ACC), which maintains the following distance from the vehicle traveling in front of the vehicle 100.

In the present embodiment, the first assistance application 56A, the second assistance application 57A, and the third assistance application 58A are each application software implementing driver assistance functionalities of the vehicle 100. The storage device 52 includes a ROM, a RAM, and storage.

The CPU 51 executes the first assistance application 56A, which is stored in the storage device 52, to implement the functionality of a first assistance unit 56, which will be described later. The CPU 51 executes the second assistance application 57A, which is stored in the storage device 52, to implement the functionality of a second assistance unit 57, which will be described later. The CPU 51 executes the third assistance application 58A, which is stored in the storage device 52, to implement the functionality of a third assistance unit 58, which will be described later.

The meter ECU 60 is configured to communicate with the central ECU 10 via a fifth external bus 75. The meter ECU 60 sends control signals to the meter display device 84 to control the display shown on the meter display device 84.

The meter ECU 60 includes a CPU 61 and a storage device 62. The storage device 62 stores various programs and various data in advance. The storage device 62 stores, in advance, a meter application 63A as one of the programs. The meter application 63A is application software for controlling the display shown on the meter display device 84. The storage device 62 includes a ROM, a RAM, and storage. The CPU 61 executes the meter application 63A, which is stored in the storage device 62, to implement the functionality of a meter control unit 63, which will be described later.

The vehicle 100 includes an acceleration sensor 91, a seat belt switch 92, and a door sensor 93. The acceleration sensor 91 is a three-axis sensor. More specifically, the acceleration sensor 91 is configured to detect longitudinal acceleration GX, lateral acceleration GY, and vertical acceleration GZ. The longitudinal acceleration GX is acceleration along the frontward-backward axis of the vehicle 100. The lateral acceleration GY is acceleration along the left-right axis of the vehicle 100. The vertical acceleration GZ is acceleration along the up-down axis of the vehicle 100.

The seat belt switch 92 is configured to detect a fasten signal SW indicating the fastened state of the seat belt for the driver's seat in the vehicle 100. In the present embodiment, the fasten signal SW is ON when the seat belt is fastened. The fasten signal SW is OFF when the seat belt is unfastened.

The door sensor 93 is configured to detect an open signal SD indicating the open state of the driver-side front door of the vehicle 100. In the present embodiment, the open signal SD is ON when the driver-side front door is open. The open signal SD is OFF when the driver-side front door is closed.

The brake ECU 40 acquires various signals from the acceleration sensor 91, the seat belt switch 92, and the door sensor 93. Further, the brake ECU 40 calculates, in control cycle determined in advance, the gradient of a road on which the vehicle 100 is located from the longitudinal acceleration GX, the lateral acceleration GY, and the vertical acceleration GZ.

Although not shown in the drawings, the vehicle 100 further includes an acceleration pedal and a brake pedal. When one of the pedals is depressed, a corresponding operation signal is sent to the ECUs, including the brake ECU 40.

### Functional Configuration of Motion Manager

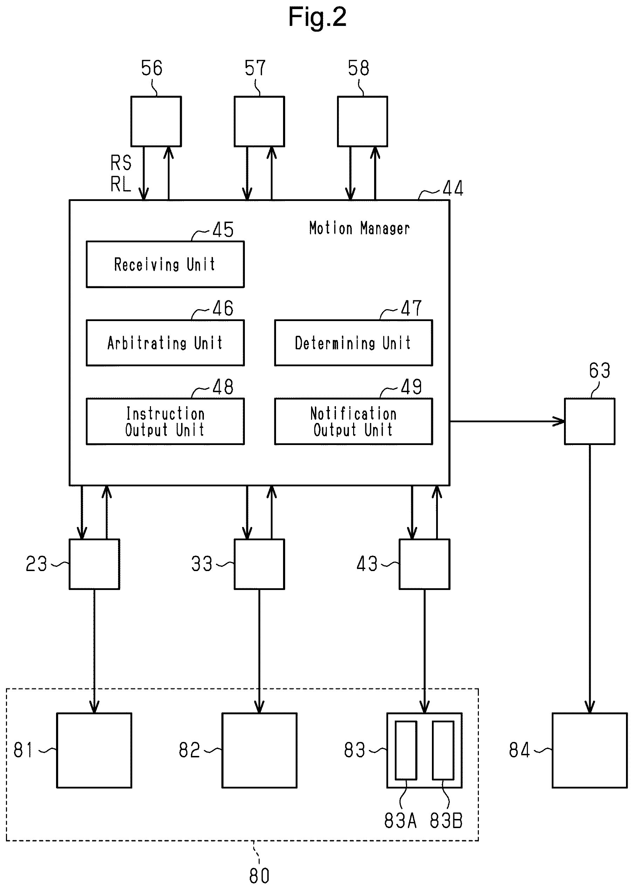

The functional configuration of the motion manager 44 will now be described with reference to Fig. 2. As shown in Fig. 2, the motion manager 44 is configured to communicate with the first assistance unit 56, the second assistance unit 57, and the third assistance unit 58. Further, the motion manager 44 is configured to communicate with the power train control unit 23, the steering control unit 33, and the brake control unit 43.

The first assistance unit 56, the second assistance unit 57, and the third assistance unit 58 each send a motion request to the motion manager 44 to execute a corresponding control routine. The first assistance unit 56, the second assistance unit 57, and the third assistance unit 58 each continue sending the motion request, for example, from when execution of the corresponding routine becomes necessary to when execution of the corresponding routine becomes unnecessary. The motion request includes an acceleration value request for controlling acceleration of the vehicle 100 in the longitudinal direction, a stationary-state hold request RS for holding the vehicle 100 in a stationary state, a limiting request RL for limiting the driving force of the vehicle 100, and other requests.

The motion manager 44 includes a receiving unit 45, an arbitrating unit 46, a determining unit 47, an instruction output unit 48, and a notification output unit 49. Each of these units is a processor. The receiving unit 45 receives motion requests from the first assistance unit 56, the second assistance unit 57, and the third assistance unit 58.

In the present embodiment, the receipt of motion requests from the first assistance unit 56, the second assistance unit 57, and the third assistance unit 58 corresponds to the receipt of motion requests from application software. More specifically, the receiving unit 45 receives the stationary-state hold request RS as a motion request from application software. The receiving unit 45 sends the received motion request to the arbitrating unit 46.

The arbitrating unit 46 arbitrates the motion requests received by the receiving unit 45. For example, when the receiving unit 45 receives acceleration value requests from the assistance units, the arbitrating unit 46 selects the request for the smallest acceleration value as the arbitration result. When the receiving unit 45 receives a stationary-state hold request RS from any one of the assistance units, the arbitrating unit 46 selects the stationary-state hold request RS as the arbitration result regardless of the other motion requests.

The determining unit 47 performs various determinations based on the arbitration result given by the arbitrating unit 46. The determinations include determination of whether to start execution of stationary-state hold control or whether to start execution of driving operation switch control when the arbitration result is the stationary-state hold request RS. The determinations performed by the determining unit 47 will be described in detail later.

The instruction output unit 48 sends an instruction signal to the actuator system 80 to control the actuator system 80 in accordance with a motion request that is based on the arbitration result given by the arbitrating unit 46 and the determination result given by the determining unit 47.

For example, when controlling the power train device 81, the instruction output unit 48 sends an instruction signal of a motion request to the power train control unit 23. In response to the instruction signal of the motion request, the power train control unit 23 sends a control signal to the power train device 81. In this manner, the instruction output unit 48 sends an instruction signal to the control unit corresponding to the actuator that is to be controlled. The control unit then controls the actuator.

The notification output unit 49 sends a notification signal MS to the meter display device 84 based on the arbitration result given by the arbitrating unit 46 and the determination result given by the determining unit 47. The notification signal MS controls the display on the meter display device 84 to display a notification on the meter display device 84 prompting the driver to perform a driving operation.

The notification output unit 49 sends the notification signal MS to the meter control unit 63. In response to the notification signal MS, the meter control unit 63 controls the meter display device 84 to display an image prompting the driver to perform a driving operation. That is, the notification output unit 49 sends the notification signal MS to the meter display device 84 via the meter control unit 63.

### Process Performed When Stationary-State Hold Request is the Arbitration Result

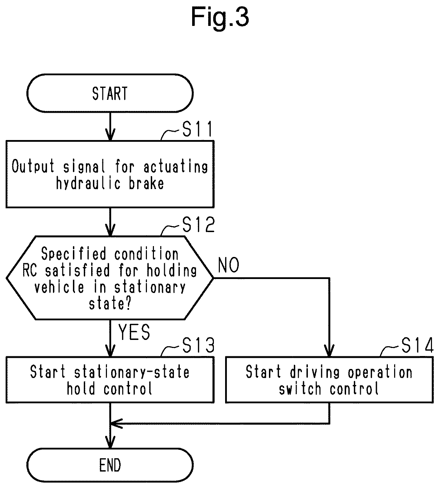

When the stationary-state hold request RS is the arbitration result given by the arbitrating unit 46, the motion manager 44 starts a series of processes to execute the stationary-state hold control or the driving operation switch control. The motion manager 44 executes the series of processes shown in Fig. 3 by having one of the determining unit 47, the instruction output unit 48, and the notification output unit 49 execute a corresponding process.

As shown in Fig. 3, when the instruction output unit 48 acquires the stationary-state hold request RS as the arbitration result from the arbitrating unit 46, the instruction output unit 48 first performs step S11. In step S11, the instruction output unit 48 sends an instruction signal for actuating the hydraulic brake 83A to the hydraulic brake 83A via the brake control unit 43.

When the arbitration result of the arbitrating unit 46 is the stationary-state hold request RS, the receiving unit 45 has already received the stationary-state hold request RS. That is, on condition that the receiving unit 45 received the stationary-state hold request RS, the instruction output unit 48 sends the instruction signal for actuating the hydraulic brake 83A to the hydraulic brake 83A.

In the present embodiment, on condition that the receiving unit 45 received the stationary-state hold request RS and that the arbitration result of the arbitrating unit 46 is the stationary-state hold request RS, the instruction output unit 48 sends the instruction signal for actuating the hydraulic brake 83A to the hydraulic brake 83A.

In step S11, the instruction output unit 48 sends the instruction signal for actuating the hydraulic brake 83A to the hydraulic brake 83A. Then, the motion manager 44 proceeds to step S12.

In step S12, the determining unit 47 determines whether the vehicle 100 satisfies a specified condition RC when the receiving unit 45 received the stationary-state hold request RS. The specified condition RC is a condition required for holding the vehicle 100 in the stationary state when the hydraulic brake 83A is de-actuated and is determined in advance through experiments and simulations.

The specified condition RC includes the vehicle 100 being located on a road having a gradient that is less than a specified gradient determined in advance. The specified gradient is the maximum gradient at which the vehicle 100 can be held in the stationary state when the parking brake 83B is actuated.

The specified condition RC includes the driver having not performed an operation for exiting the vehicle 100. For example, conditions indicating operations performed by the driver to exit the vehicle 100 include the driver-side front door having been opened and the seat belt for the driver's seat having been unfastened. In the present embodiment, the specified condition RC includes the fasten signal SW not having been switched from ON to OFF, and the open signal SD having not switched from OFF to ON.

If the determining unit 47 determines that the vehicle 100 satisfies the specified condition RC (S12: YES), the motion manager 44 proceeds to step S13. In step S13, the motion manager 44 starts the stationary-state hold control. The stationary-state hold control will be described in detail later. Then, the motion manager 44 ends the series of processes in the present cycle.

If the determining unit 47 determines that the vehicle 100 does not satisfy the specified condition RC (S12: NO), the motion manager 44 proceeds to step S14. In step S14, the motion manager 44 starts the driving operation switch control. The driving operation switch control will be described in detail later. Then, the motion manager 44 ends the series of processes in the present cycle.

### Stationary-State Hold Control

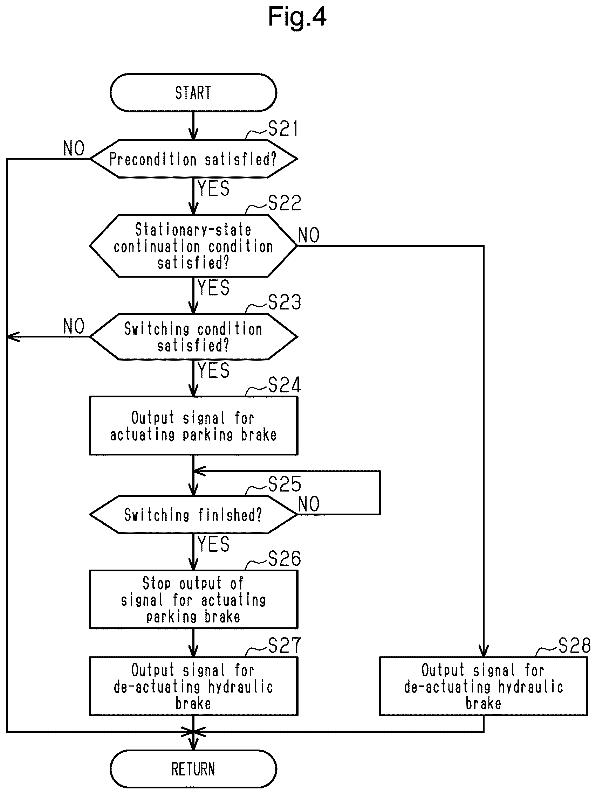

As shown in Fig. 4, when the motion manager 44 starts the stationary-state hold control, the motion manager 44 first performs step S21. The motion manager 44 executes the series of processes shown in Fig. 4 by having the determining unit 47, the instruction output unit 48, and the notification output unit 49 perform corresponding processes.

In step S21, the determining unit 47 determines whether a precondition, which is determined in advance, is satisfied. One example of the precondition is a condition in which the hydraulic brake 83A is actuated and the parking brake 83B is de-actuated.

If the determining unit 47 determines that the precondition is not satisfied (S21: NO), the motion manager 44 ends the current stationary-state hold control cycle. When the determining unit 47 determines that the precondition is satisfied (S21: YES), the motion manager 44 proceeds to step S22.

In step S22, the determining unit 47 determines whether a stationary-state continuation condition is satisfied. The stationary-state continuation condition is determined in advance as a condition for allowing the vehicle 100 to remain in the stationary state. One example of the stationary-state continuation condition is the road gradient being less than the specified gradient. Accordingly, for example, if the vehicle 100 is located on a level road or the vehicle 100 is located on a slightly sloped road, the stationary-state continuation condition is satisfied.

If the determining unit 47 determines that the stationary-state continuation condition is satisfied (S22: YES), the motion manager 44 proceeds to step S23. In step S23, the determining unit 47 determines whether a switching condition is satisfied. The switching condition is determined in advance as a condition for allowing the parking brake 83B to be actuated.

The switching condition is satisfied when the driver has not performed an operation indicating that the driver is intending to exit the vehicle 100. For example, the switching condition is satisfied if the fasten signal SW has not switched from ON to OFF and the open signal SD has not switched from OFF to ON.

If the determining unit 47 determines that the switching condition is not satisfied (S23: NO), the motion manager 44 ends the current stationary-state hold control cycle.

If the determining unit 47 determines that the switching condition is satisfied (S23: YES), the motion manager 44 proceeds to step S24. In step S24, the instruction output unit 48 sends an instruction signal for actuating the parking brake 83B to the parking brake 83B via the brake control unit 43. Then, the motion manager 44 proceeds to step S25.

In step S25, the determining unit 47 determines whether the parking brake 83B has finished switching from a de-actuated state to an actuated state. For example, the determining unit 47 determines whether the parking brake 83B has finished switching from a de-actuated state to an actuated state by referring to a status signal that is output from the parking brake 83B and indicates the status of the parking brake 83B.

The status signal includes a signal indicating that the parking brake 83B is actuated, a signal indicating that the parking brake 83B is de-actuated, and a signal indicating that the parking brake 83B is in a transition state.

Accordingly, the determining unit 47 determines that the parking brake 83B has finished switching from a de-actuated state to an actuated state when receiving a signal indicating that the parking brake 83B is actuated.

If the determining unit 47 determines that the parking brake 83B has not finished switching from a de-actuated state to an actuated state (S25: NO), the motion manager 44 repeats step S25.

If the determining unit 47 determines that the parking brake 83B has finished switching from a de-actuated state to an actuated state (S25: YES), the motion manager 44 proceeds to step S26.

In step S26, the instruction output unit 48 stops outputting the instruction signal for actuating the parking brake 83B. Then, the motion manager 44 proceeds to step S27.

In step S27, the instruction output unit 48 sends an instruction signal for de-actuating the hydraulic brake 83A to the hydraulic brake 83A via the brake control unit 43. Then, the motion manager 44 ends the series of processes in the current stationary-state hold control cycle.

If the determining unit 47 determines in step S22 that the stationary-state continuation condition is not satisfied (S22: NO), the motion manager 44 proceeds to step S28.

In step S28, the instruction output unit 48 sends an instruction signal for de-actuating the hydraulic brake 83A to the hydraulic brake 83A via the brake control unit 43. Then, the motion manager 44 ends the series of processes in the current stationary-state hold control cycle.

### Driving Operation Switch Control

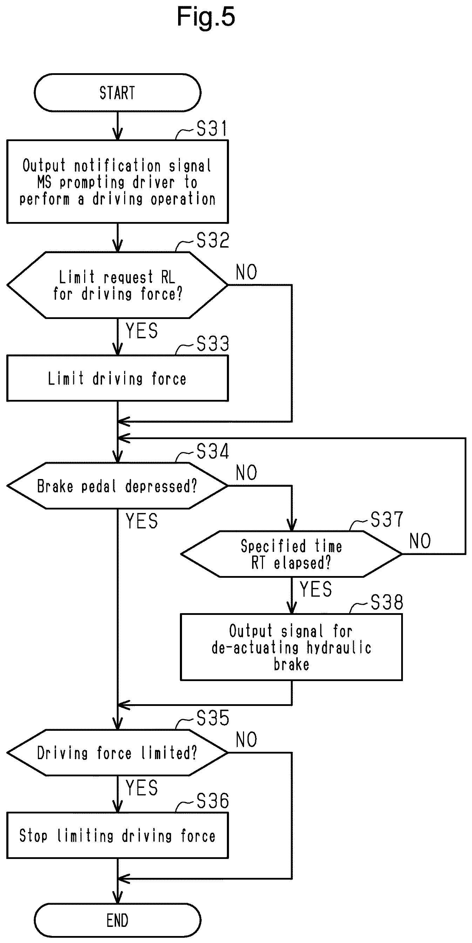

As shown in Fig. 5, when the motion manager 44 starts the driving operation switch control, the motion manager 44 first performs step S31. If the determining unit 47, the instruction output unit 48, and the notification output unit 49 each perform the corresponding process, the motion manager 44 executes the series of processes shown in Fig. 5.

In step S31, the notification output unit 49 sends the notification signal MS to the meter display device 84 via the meter control unit 63. More specifically, if the vehicle 100 does not satisfy the specified condition RC when the receiving unit 45 receives the stationary-state hold request RS, the notification output unit 49 sends the notification signal MS to the meter display device 84.

The meter control unit 63 then displays an image on the meter display device 84 that prompts the driver to perform a driving operation. Then, the motion manager 44 proceeds to step S32.

In step S32, the determining unit 47 determines whether there is a limiting request RL for the driving force. More specifically, if the receiving unit 45 receives the stationary-state hold request RS, which is the arbitration result, the determining unit 47 determines whether the receiving unit 45 is receiving the stationary-state hold request RS together with the limiting request RL. That is, if the receiving unit 45 receives the stationary-state hold request RS and the limiting request RL from the same assistance unit, the determining unit 47 determines that there is a limiting request RL for the driving force.

If the determining unit 47 determines that there is a limiting request RL for the driving force (S32: YES), the motion manager 44 proceeds to step S33. In step S33, the instruction output unit 48 limits the driving force. More specifically, the instruction output unit 48 sends an instruction signal for limiting the driving force to the power train device 81 via the power train control unit 23.

The instruction signal is for limiting the driving force output from the power train device 81 even if the acceleration pedal is depressed, as long as an instruction signal for stopping the limitation is not transmitted, as will be described later.

In step S33, after the instruction output unit 48 outputs a signal for limiting the driving force, the motion manager 44 proceeds to step S34. In step S32, if the determining unit 47 determines that there is no limiting request RL for the driving force (S32: NO), the motion manager 44 proceeds to step S34 without performing step S33.

In step S34, the determining unit 47 determines whether the brake pedal of the vehicle 100 is being depressed. If the brake pedal is being depressed (S34: YES), the motion manager 44 proceeds to step S35.

In step S35, the determining unit 47 determines whether the motion manager 44 is limiting the driving force. More specifically, in the current driving operation switch control cycle, if the motion manager 44 performs step S33, the determining unit 47 determines that the driving force is being limited. That is, if the instruction output unit 48 outputs an instruction signal indicating that the driving force is to be limited, the determining unit 47 determines that the driving force is being limited.

If the motion manager 44 is limiting the driving force (S35: YES), the motion manager 44 proceeds to step S36. In step S36, the instruction output unit 48 outputs an instruction signal to stop limiting the driving force. Then, the motion manager 44 ends the series of processes in the current driving operation switch control cycle.

If the motion manager 44 is not limiting the driving force (S35: NO), the motion manager 44 ends the series of processes in the current driving operation switch control cycle without performing step S36.

If the brake pedal is not being depressed in step S34 (S34: NO), the motion manager 44 proceeds to step S37. In step S37, the determining unit 47 determines whether a specified time RT has elapsed from when the instruction output unit 48 output the notification signal MS.

The specified time RT is set in advance as the time required for the driver to start performing a driving operation on the vehicle 100. More specifically, the specified time RT is the time required for the driver to depress the brake pedal from a state in which the driver has unfastened the seat belt and opened the front door.

If the specified time RT has not elapsed (S37: NO), the motion manager 44 returns to step S34. If the specified time RT has elapsed (S37: YES), the motion manager 44 proceeds to step S38.

In step S38, the instruction output unit 48 sends an instruction signal for de-actuating the hydraulic brake 83A to the hydraulic brake 83A via the brake control unit 43. Then, the motion manager 44 proceeds to step S35. In this manner, an engine ECU, which is a computer for executing the motion manager application 44A, performs the method for processing information.

### Operation of Present Embodiment

In one example, the receiving unit 45 receives a motion request from the third assistance unit 58 so that the vehicle 100 implements ACC with the third assistance application 58A. In this case, the arbitration result of the arbitrating unit 46 is such motion request, and the instruction output unit 48 sends an instruction to the actuator system 80 to implement the motion request. The actuator system 80 is controlled based on the instruction signal.

In this case, the receiving unit 45 receives, for example, the stationary-state hold request RS. Accordingly, the instruction output unit 48 sends an instruction signal for actuating the hydraulic brake 83A to the hydraulic brake 83A.

Then, if the vehicle 100 satisfies the specified condition RC, that is, if the parking brake 83B allows the vehicle 100 to be held in the same state and the driver is not exiting the vehicle 100, the motion manager 44 executes stationary-state hold control.

If the vehicle 100 does not satisfy the specified condition RC, that is, if the parking brake 83B cannot hold the vehicle 100 held in the same state and the driver is about to exit the vehicle 100, the motion manager 44 executes driving operation switch control.

When the motion manager 44 executes driving operation switch control, the notification output unit 49 sends the notification signal MS to the meter display device 84. As a result, the meter display device 84 displays an image prompting the driver to perform a driving operation.

### Advantages of Present Embodiment

(1) The motion manager 44 includes the receiving unit 45, the instruction output unit 48, and the notification output unit 49. The receiving unit 45 receives, from the application software, a stationary-state hold request RS as a motion request for holding the vehicle 100 in a stationary state. The instruction output unit 48 sends, on condition that the receiving unit 45 received the stationary-state hold request RS, an instruction signal to the hydraulic brake 83A of the vehicle 100 for actuating the hydraulic brake 83A. When the receiving unit 45 receives the stationary-state hold request RS, if the hydraulic brake 83A is de-actuated and the specified condition RC for holding the vehicle 100 in a stationary state is not satisfied, the notification output unit 49 sends the notification signal MS to the meter display device 84, which is installed in the vehicle 100, so that the meter display device 84 displays a notification prompting the driver of the vehicle 100 to perform a driving operation.
   If the vehicle 100 does not satisfy the specified condition RC when the stationary-state hold request RS is received, the motion manager 44 sends the notification signal MS to the meter display device 84. This allows the driver to recognize that a driving operation has to be performed. As a result, the driver is prompted to perform a driving operation thereby avoiding a situation in which the vehicle 100 cannot be held in a stationary state.
(2) The notification signal MS is for indicating a notification on the meter display device 84 prompting the driver to perform a driving operation. Thus, the motion manager 44 allows the driver to visually recognize that a driving operation has to be performed.
(3) The specified condition RC includes the vehicle 100 being located on a road having a gradient that is less than a specified gradient, which is determined in advance. When the specified condition RC is not satisfied, it may be difficult to hold the vehicle 100 in a stationary state even if, for example, the parking brake 83B is functioning normally. Thus, by prompting the driver to perform a driving operation when the vehicle 100 is located on a road having a gradient that is greater than or equal to a specified gradient, a situation can be avoided in which the vehicle 100 cannot be held in the stationary state.
(4) The specified condition RC includes the driver having not performed an operation for exiting the vehicle 100. When the specified condition RC is not satisfied, the driver is likely to exit the vehicle 100. In this case, the driver is prompted to perform a driving operation so that the driver performs a driving operation without exiting the vehicle 100. This avoids a situation in which the vehicle 100 cannot be held in the stationary state.
(5) If the specified time RT elapses from when an instruction signal is sent to the hydraulic brake 83A for actuating the hydraulic brake 83A, the instruction output unit 48 sends an instruction signal to the hydraulic brake 83A to de-actuate the hydraulic brake 83A.
   In this case, when the driver is not performing a driving operation, the stationary state of the vehicle 100 is cancelled to further prompt the driver to perform a driving operation. This allows the motion manager 44 to avoid a situation in which the vehicle 100 cannot be continuously held in the stationary state.
(6) The specified time RT is set in advance as the time required for the driver to start performing a driving operation on the vehicle 100. This provides the driver with the time required to start performing a driving operation before the stationary state of the vehicle 100 is cancelled when the driver is prompted to perform a driving operation. Since the stationary state of the vehicle 100 is cancelled in this manner, a situation is avoided in which in the time during which the vehicle 100 cannot be held in the stationary state becomes excessively long.
(7) On condition that the receiving unit 45 receives, from the application software, a limiting request RL as a motion request that limits the driving force of the vehicle 100 when the acceleration pedal is depressed, the instruction output unit 48 sends an instruction signal to the power train device 81 of the vehicle 100 for limiting the driving force in accordance with the limiting request RL.
   When prompting the driver to perform a driving operation, the driver may erroneously depress the acceleration pedal, causing the vehicle 100 to start moving suddenly. In this case, the driving force is limited to avoid such a situation in which the driver erroneously depresses the acceleration pedal and causes the vehicle 100 to start moving suddenly.
(8) On condition that the brake pedal is depressed, the instruction output unit 48 outputs an instruction signal to stop limiting the driving force in accordance with the limiting request RL. In this case, if the driver depresses the brake pedal and then depresses the acceleration pedal, the driving force will no longer be limited.

### Modified Examples

The above embodiments may be modified as described below. The above embodiments and the modified examples described below may be combined as long as there is no technical contradiction.

The contents of the stationary-state hold control is not limited to the example of the above embodiment. For example, the stationary-state continuation condition of step S22 may be changed. For example, instead of or in addition to the road gradient being less than the specified gradient, the stationary-state continuation condition may include a different requirement.

Further, for example, step S22 may be omitted. In this case, when an affirmative determination is given in step S21, the motion manager 44 may proceed to step S23. In this case, step S28 may be omitted.

For example, the switching condition of step S23 may be changed. Instead of or in addition to the driver taking actions indicating that the driver is about the exit the vehicle 100, the switching condition may include a different requirement.

For example, step S13 may be omitted. In this case, when an affirmative determination is given in step S12, the motion manager 44 may proceed to step S24.

The vehicle 100 is not limited to the configuration in the example of the above embodiment.

For example, the ECU implementing the functionality of the motion manager 44 does not have to be the brake ECU 40. In a specific example, instead of the brake ECU 40, the CPU 11 of the central ECU 10 may execute the motion manager application 44A stored in the storage device 12 to implement the functionality of the motion manager 44. Accordingly, in the above embodiment, the central ECU 10, the power train ECU 20, the steering ECU 30, the brake ECU 40, the advanced driver assistance ECU 50, and the meter ECU 60 may implement the functionality of the motion manager 44.

The notification device does not have to be the meter display device 84. For example, the notification device may be an on-board display of a car navigation system. The notification signal MS does not have to be a signal for displaying an image on a display to prompt the driver to perform a driving operation. Further, the notification device may include a speaker. In this case, the notification signal MS may be a signal for generating sound to prompt the driver to perform a driving operation.

The specified condition RC does not have to include the vehicle 100 being located on a road having a gradient that is less than a specified gradient, which is determined in advance. The specified condition RC does not have to include the driver having not performed an operation for exiting the vehicle 100. For example, the specified condition RC may include the parking brake 83B functioning normally.

Further, for example, the specified condition RC may include an image of the driver of the vehicle 100 acquired by a camera indicating an abnormal driver condition. In this case, the motion manager 44 may determine that the specified condition RC is satisfied and execute the stationary-state hold control even if the driver performs an operation for exiting the vehicle.

The instruction output unit 48 does not have to send an instruction signal to the hydraulic brake 83A to de-actuate the hydraulic brake 83A even if the specified time RT elapses from when an instruction signal is sent to the hydraulic brake 83A for actuating the hydraulic brake 83A. For example, the instruction output unit 48 may output an instruction signal that keeps the hydraulic brake 83A actuated until the brake pedal is depressed.

The specified time RT does not have to be set in advance as the time required for the driver to start performing a driving operation on the vehicle 100. For example, when the notification device is a speaker that generates sound prompting the driver to perform a driving operation as described above in a modified example, the specified time RT may be set as the time for completing the notification.

Even if the receiving unit 45 received the limiting request RL, the instruction output unit 48 does not have to send an instruction signal to the power train device 81 for limiting the driving force in accordance with the limiting request RL.

Even if the brake pedal is depressed, the instruction output unit 48 does not have to output an instruction signal to stop liming the driving force in accordance with the limiting request RL. For example, after outputting a signal for limiting the driving force in accordance with the limiting request RL, the instruction output unit 48 may continue to limit the driving force until the power of the vehicle 100 goes OFF.

In the above embodiment, the motion manager 44 includes a central processing unit (CPU), a random-access memory (RAM), and a read-only memory (ROM). The motion manager 44 executes software processing. However, this is only an example. For example, the motion manager 44 may include a dedicated hardware circuit that executes at least part of the software processing in the present embodiment. The dedicated hardware includes an application-specific integrated circuit (ASIC). That is, the motion manager 44 may have any of following configurations (a) to (c). (a) The motion manager 44 includes a processor that executes all of the processes according to programs and a program storage device such as a ROM that stores the programs. That is, the motion manager 44 includes a software execution device. (b) The motion manager 44 includes a processor, for executing part of the processes according to programs, and a program storage device. Further, the motion manager 44 includes a dedicated hardware circuit that executes the remaining processes. (c) The motion manager 44 includes a dedicated hardware circuit that executes all of the processes. There may be more than one software processing device and/or dedicated hardware circuit. That is, the above processes may be executed by processing circuitry including at least one of a set of one or more software processing devices and a set of one or more dedicated hardware circuits. The processing circuitry may include more than one software processing device and/or exclusive hardware circuit. The program storage device, or computer readable medium, includes any available medium that is accessible by a versatile or dedicated computer.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A motion manager (44), comprising:
a receiving unit (45) configured to receive, from application software, a stationary-state hold request as a motion request for holding a vehicle (100) in a stationary state;
an instruction output unit (48) configured to send, on condition that the receiving unit (45) received the stationary-state hold request, an instruction signal to a hydraulic brake (83A) of the vehicle (100) for actuating the hydraulic brake (83A); and
a notification output unit (49) configured to send a notification signal to a notification device (84), installed in the vehicle (100), for issuing a notification to a driver prompting the driver to perform a driving operation if a specified condition, determined in advance, for holding the vehicle (100) in the stationary state is not satisfied in case the hydraulic brake (83A) is in a de-actuated state, when the receiving unit (45) receives the stationary-state hold request.

2. The motion manager (44) according to claim 1, wherein:
the notification device (84) is a display; and
the notification signal is for indicating the notification on the display prompting the driver to perform the driving operation.

3. The motion manager (44) according to claim 1 or 2, wherein the specified condition is that the vehicle (100) is located on a road having a gradient that is less than a specified gradient determined in advance.

4. The motion manager (44) according to any one of claims 1 to 3, wherein the specified condition is that the driver has not performed an operation for exiting the vehicle (100).

5. The motion manager (44) according to any one of claims 1 to 4, wherein if a specified time, determined in advance, elapses from when the instruction signal for actuating the hydraulic brake (83A) is sent to the hydraulic brake (83A), the instruction output unit (48) is configured to send an instruction signal to the hydraulic brake (83A) for de-actuating the hydraulic brake (83A).

6. The motion manager (44) according to claim 5, wherein the specified time is set in advance as a time required for the driver to start performing the driving operation.

7. The motion manager (44) according to any one of claims 1 to 6, wherein on condition that the receiving unit (45) received, from the application software, a limiting request as a motion request for limiting a driving force of the vehicle (100) when an acceleration pedal is depressed, the instruction output unit (48) is configured to send an instruction signal to a power train of the vehicle (100) for limiting the driving force in accordance with the limiting request.

8. The motion manager (44) according to claim 7, wherein on condition that a brake pedal is depressed, the instruction output unit (48) is configured to output an instruction signal to stop limiting the driving force in accordance with the limiting request.

9. A method for processing information implemented by a computer installed in a vehicle (100), the method comprising:
receiving, from application software, a stationary-state hold request as a motion request for holding the vehicle (100) in a stationary state;
on condition that the stationary-state hold request has been received, sending an instruction signal to a hydraulic brake (83A) of the vehicle (100) for actuating the hydraulic brake (83A); and
outputting a notification signal for issuing a notification to a driver that prompts the driver to perform a driving operation if a specified condition, determined in advance, for holding the vehicle (100) in the stationary state is not satisfied in case the hydraulic brake (83A) is in a de-actuated state, when the stationary-state hold request is received.
